# NEUE EUROPÄISCHE PATENTSCHRIFT

(11) **EP 0 775 337 B2**
(45) Veröffentlichungstag und Bekanntmachung des Hinweises auf die Entscheidung über den Einspruch: **23.01.2002**
(45) Hinweis auf die Patenterteilung: 07.10.1998
(21) Anmeldenummer: 95929851.4
(22) Anmeldetag: 11.08.1995
(51) Int. Cl.: G05D 3/14

(54) **REGELANORDNUNG FÜR HYDRAULISCHE ANTRIEBE**
HYDRAULIC DRIVE CONTROL SYSTEM
SYSTEME DE REGULATION DE MECANISMES HYDRAULIQUES D'ENTRAINEMENT

(30) Priorität: 12.08.1994 DE 4428691
(43) Veröffentlichungstag der Anmeldung: 28.05.1997
(73) Patentinhaber: Mannesmann Rexroth AG, 97816 Lohr am Main (DE)
(72) Erfinder: SCHMIDT, Stefan, D-97816 Lohr am Main (DE); REINERT, Michael, D-97816 Lohr am Main (DE); NEUMANN, Joachim, D-97816 Lohr am Main (DE)
(74) Vertreter: Patentanwälte Hauck, Graalfs, Wehnert, Döring, Siemons
(86) Internationale Anmeldenummer: EP9503192
(87) Internationale Veröffentlichungsnummer: WO9605543

(56) Entgegenhaltungen:
- EP-A- 0 308 762
- DE-A- 3 532 931
- FR-A- 2 494 785
- PATENT ABSTRACTS OF JAPAN vol. 16 no. 36 (M-1205) ,31.Oktober 1991 & JP,A,03 244804 (DAIKIN IND LTD) 31.Oktober 1991,

## Beschreibung

Die Erfindung betrifft eine Regelanordnung für hydraulische Antriebe gemäß dem Oberbegriff des Patentanspruchs 1. Insbesondere ist an hydraulische Zylinderantriebe gedacht.

Regelmäßig sind hydraulische Zylinderantriebe mit einer Positions-, Druck- Kraft- oder Geschwindigkeitsregelung versehen. Dabei wird z.B. der vom Kolben zurückgelegte Weg in einem Wegaufnehmer gemessen und als Ist-Wert, zusammen mit einem Soll-Wert in eine Regelelektronik eingespeist, in der aus beiden Werten die Regelabweichung gebildet und hieraus ein Stellsignal zum Ansteuern eines Ventils erzeugt wird, das im Druckmittelweg zwischen dem Antrieb, einer Druckmittelquelle und einem Tank vorgesehen ist.

Durch eine unterlagerte Rückführung von Zustandsgrößen läßt sich die Regelgüte verbessern.

Für eine Lageregelung werden als Zustandsgrößen üblicherweise die Geschwindigkeit und die Beschleunigung herangezogen.

Diese Größen werden gemessen oder mittels eines Modellbildners aus dem Wegsignal errechnet. Bedingt durch die Qualität des Wegsignals liefert eine Differentation in der Regel keine verwertbaren Zustandsgrößen.

Es ist auch bekannt, bei Differential- oder Gleichgangzylindern den Differenzdruck beider Zylinderkammern für die Zustandsregelung zu verwenden.

Mit der Weg-, Geschwindigkeits- oder Beschleunigungs- bzw. Differenzdruckmessung lassen sich aber bestimmte Betriebszustände hydraulischer Antriebe nicht ausreichend erfassen. Wird beispielsweise beim Rückhub einer großen Presse das Ventil zur Dekompression und Rückleitung des aus dem Zylinderraum verdrängten Strömungsmittels zum Tank geöffnet, so kann dies bei langen Rohrleitungen bzw. großen Strömungsmittel-Volumina zu Schwingungen führen, die von bekannten Geschwindigkeits- oder Beschleunigungsrückführungen nicht erkannt werden, da die benötigten Zustandsgrößen meßtechnisch kaum zu erfassen sind. Dies gilt auch für die Zustandsregelung niederfrequenter hydraulischer Antriebe mit Plungerzylindern ohne geeignetes Wegmeßsystem. Ein anderer Anwendungsfall ist die Geräuschreduzierung hydraulischer Antriebe, beispielsweise für Stanz- und Nibbelmaschinen. Dabei entsteht das Geräusch hauptsächlich beim Durchbrechen des Materials. Durch das Wegbrechen der Last wird der Zylinderkolben sehr stark beschleunigt.

Eine Regelanordnung gemäß dem Oberbegriff des Patentanspruchs 1 ist aus der EP 0 164 602 B1 bekannt. Bei dieser Regelanordnung wird der in der Förderleitung zwischen Ventil und Antrieb abgegriffene Druck-Istwert zusammen mit dem Druckänderungssignal (Istwertvorhalt) einem elektrischen Regelverstärker zugeführt, dem auch ein Druck-Sollwert eingegeben wird. Im Regelverstärker werden der Druck-Soll- und Istwert verglichen und einem Mengenbegrenzer übermittelt und so lange korrigiert, bis dieser durch entsprechende Einstellung der Fördermenge den Druck-Istwert hergestellt hat. Durch das Druckänderungssignal (Istwertvorhalt) soll eine Dämpfung und ein gutes Einschwingverhalten des Druckes erreicht werden, wenn von einer Mengen- zur Druckregelung übergegangen wird.

Somit liegt der Erfindung die Aufgabe zugrunde, eine Regelanordnung für die Bedämpfung niederfrequenter hydraulischer Antriebe und/oder von Schwingungen in großen Volumina bzw. Rohrleitungen zu schaffen, insbesondere zur Schnittschlagdämpfung hochfrequenter Antriebe.

Die genannte Aufgabe ist erfindungsgemäß durch die Merkmale des Patentanspruchs 1 gelöst.

Erfindungsgemäß wird die benötigte Zustandsgröße für die Bedämpfung dadurch erfaßt, daß der hydraulische Druck gemessen und differenziert wird, um ein Signal für die Druckänderung zu erhalten. Dieses Druckänderungssignal ist der Änderung der Beschleunigung direkt proportional. Erfindungsgemäß wird also nicht versucht, die Beschleunigungsänderung von der üblichen Positionsregelung oder einem Modell abzuleiten. Stattdessen wird z.B. die Zustandsgröße p, also die der Beschleunigungsänderung proportionale Druckänderung ermittelt und dieses Signal zur Ansteuerung des Ventils verwendet. Die Ermittelung und Verarbeitung des Druckgradienten ist sowohl in analogen als auch in digitalen Elektroniken sehr einfach möglich. Der Druck selbst läßt sich in einfacher Weise messen.

Der Druckmeßwert kann ein- oder mehrfach differenziert werden, wobei einmaliges Differenzieren erfahrungsgemäß immer möglich ist, während beim mehrfachen Differenzieren bereits kleinere Störgrößen soweit verstärkt werden, daß die Verwendung dieses Signals zu Schwierigkeiten führen kann. Es wird deshalb vorgezogen, mehrfache Ableitungen in einem Modellbildner zu erzeugen, dem der Druckmeßwert zugeführt wird, und in dem in bekannter Weise das Regelverhalten des Antriebes nachgebildet wird. Damit ist die Differenzierung von dem vorgenannten Störgrößeneinfluß unabhängig.

Einsatzgebiete sind beispielsweise Rohrleitungen in Schmiedepressen und anderen Großpressen, also niederfrequenten hydraulischen Antrieben mit großen Volumina. Die erfindungsgemäße Bedämpfung bzw. Frequenzanhebung führt hier zu einer wesentlichen Verbesserung des Verhaltens hydraulischer Regelachsen, beispielsweise zu kleineren Taktzeiten der Pressen. Ein spezielles Anwendungsbeispiel ist die Schnittschlagdämpfung an den erwähnten Nibbelmaschinen. Dabei wird der gemessene Lastdruck differenziert und richtungsabhängig dem Stellsignal der Positionsregelung der Regelachse derart überlagert, daß das Ventil proportional zur Entlastungsgeschwindigkeit schließt bzw. in die Gegenrichtung öffnet. Es erfolgt also eine aktive Dämpfung des Entlastungsschlages und damit eine wirkungsvolle Geräuschverringerung. Erfindungsgemäß ist die Geschwindigkeitsreduzierung während des kurzzeitigen Schließens des Ventils sehr kurz.

An sich läßt sich der Durchbrechpunkt in der Regelelektronik allein durch Messung des Lastdruckes erkennen. Dann kann das Schließen des Ventils entsprechend einer gesteuerten Logik erfolgen, in der die Ventilsollwerte, Materialzustandsgrößen, wie Blechdicke und Werkstoffe und Kenngrößen für das jeweils verwendete Werkzeug abgespeichert sind. Dabei müssen die Steuersignale für das Ventil durch entsprechende Versuche ermittelt werden. Die Anmelderin behält sich vor, auch auf ein derartiges Steuerverfahren einen Haupt-bzw. Nebenanspruch zu richten. Sicherlich ist aber das Regelverfahren überlegen, bei dem also der gemessene Druck differenziert und dem Stellsignal der Regelachse überlagert wird. Sinnvoll ist auch die Kombination beider Verfahren, um die Wirksamkeit der Rückführung zu verbessern.

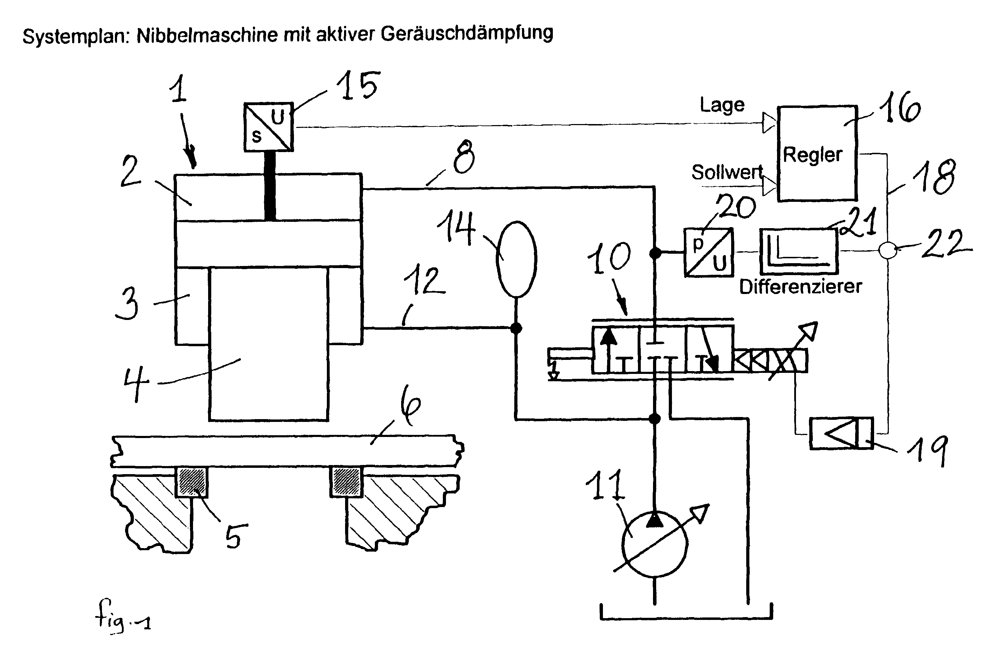

Ein Ausführungsbeispiel der Erfindung ist nachstehend anhand der einzigen Figur der Zeichnung erläutert, in der die Regelanordnung zur Geräuschdämpfung an einer Nibbelmaschine schematisch dargestellt ist.

Der Antrieb in Form eines hydraulischen Zylinders 1 besitzt einen kolbenstirnseitigen Raum 2 und einen kolbenstangenseitigen Zylinderraum 3. Der Stempel 4 soll ein auf einer Matrize 5 aufgelegtes Werkstück 6 durchtrennen. Der kolbenstirnseitige Raum 2 ist über eine Leitung 8 über ein WegeProportionalventil 10 mit einer Druckmittelquelle, nämlich einer Verstellpumpe 11 mit Speicher 14 verbunden. Der stangenseitige Zylinderraum 3 ist über eine Leitung 12 mit der Pumpe 11 verbunden.

Für den Antrieb 1 ist eine Lageregelung vorgesehen. Hierzu liefert ein Wegaufnehmer 15 ein Signal für den Hub des Stempels 4 als Ist-Wert. Im Regler 16 wird aus diesem Ist-Wert und einem entsprechenden Soll-Wert für die Position die Regelabweichung und aus dieser ein Stellsignal auf der Leitung 18 für die Treiberstufe 19 des Ventils 10 erzeugt.

Zum Ausführen des Stanzhubes wird das Proportionalventil 10 so verstellt, daß das Druckmittel von der Pumpe 11 über die Leitung 8 in den Zylinderraum 2 strömt und den Stempel 4 nach unten drückt. Das aus dem Zylinderraum 3 verdrängte Druckmittel strömt ebenfalls zum ventil 10. Beim Aufsetzen des Stempels 4 auf das Werkstück6 steigt der Lastdruck in der Leitung 8 entsprechend an. Dieser Druck wird im Druckaufnehmer 20 gemessen und in der Differenzierstufe 21 wird das Druckänderungssignal gebildet, das bei 22 dem Stellsignal für das Ventil 10 aufgeschaltet wird. Das Druckänderungssignal wird richtungsabhängig dem Stellsignal auf der Leitung 18 derart überlagert, daß der Druckeinbruch beim Durchbrechen des Materials ein Schließen bzw. Öffnen des Ventils 10 in Gegenrichtung bewirkt.

Zur Bedämpfung von Schwingungen des Strömungsmittels und niederfrequenter hydraulischer Antriebe ist ebenfalls die aus der Zeichnung ersichtliche Regelschaltung vorgesehen. Dabei wird das Ventil von dem mit dem Druckänderungssignal überlagerten Stellsignal der Regelschaltung so angesteuert, daß die Schwingungen gedämpft werden und damit das Verhalten einer derartigen hydraulischen Regelachse verbessert wird.

Wie bereits eingangs erwähnt, kann der Druckmeßwert auch mehrfach differenziert werden. In diesem Fall (nicht dargestellt) wird der von der Differenzierstufe 21 gelieferte Wert p der Stufe 22 und einer zweiten Differenzierstufe zugeführt, in der 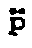 gebildet wird und auch dieser Wert wird in der Stufe 22 zuaddiert. Wie bereits erwähnt, kann aber vorteilhafterweise anstelle der beiden Differenzierstufen ein ansich bekannter Modellbildner treten, um eine zu starke Verstärkung einer Störgröße im Druckmeßwert zu vermeiden.

In der Zeichnung ist für die Ansteuerung des Ventils 10 ein Lageregler vorgesehen. Die Erfindung ist natürlich nicht hierauf beschränkt. Vielmehr können die differenzierten Druckwerte auch einer offenen Steuerkette aufgeschaltet werden, wenn die Rückführung des Lage-Ist-Wertes von Seiten des Weggebers 15 entfallen sollte.

## Patentansprüche

1. Regelanordnung für hydraulische Antriebe, insbesondere Hydrozylinder, bei der das die Druckmittelwege zwischen dem Antrieb, einer Druckmittelquelle und einem Tank steuernde Ventil von einer Regelelektronik ansteuerbar ist, wobei zum Erfassen von Zustandsgrößen des Antriebes ein Druckaufnehmer (20) und eine den Druckmeßwert zeitlich ein- oder mehrfach differenzierende Schaltung vorgesehen sind und das Druckänderungssignal zum Ansteuern des Ventils (10) verwendet wird, **dadurch gekennzeichnet, daß** für den Antrieb (1) eine Lageregelung in Form eines Regelkreises vorgesehen ist, der in Abhängigkeit von einer Abweichung zwischen Ist- und Sollwert für die Position des Antriebes (1) ein Stellsignal zum Ansteuern des Ventils (10) liefert, und daß das Druckänderungssignal dem Stellsignal der Lageregelung überlagert ist.

2. Regelanordnung nach Anspruch 1, **dadurch gekennzeichnet, daß** als differenzierende Schaltung mindestens eine Differenzierstufe (21) vorgesehen ist.

3. Regelanordnung nach Anspruch 1, **dadurch gekennzeichnet, daß** als differenzierende Schaltung ein Modellbildner vorgesehen ist.

4. Regelanordnung nach einem der Ansprüche 1 bis 3, **dadurch gekennzeichnet, daß** das Ventil von dem Druckänderungssignal über die Regelelektronik zur Bedämpfung niederfrequenter hydraulischer Antriebe angesteuert wird.

5. Regelanordnung nach einem der Ansprüche 1 bis 4, **dadurch gekennzeichnet, daß** das Ventil von dem Druckänderungssignal über die Regelelektronikzur Bedämpfung von Schwingungen großer Strömungsmittelvolumina, insbesondere in Rohrleitungen, angesteuert wird.

6. Regelanordnung nach einem der Ansprüche 1 bis 5, **dadurch gekennzeichnet, daß** das Ventil von dem Druckänderungssignal über die Regelelektronikzur Geräuschminderung einer Stanz- bzw. Nibbelmaschine in Schließrichtung angesteuert wird.

7. Regelanordnung nach einem der Ansprüche 1 bis 6, **dadurch gekennzeichnet, daß** die zeitliche Ableitung des Drucksignals dem Stellsignal eines Regelkreises oder einer offenen Steuerkette überlagert ist.

## Claims

1. A control system for hydraulic power units, in particular hydraulic piston cylinder assemblies, comprising a valve which is controlled by an electronic controller for controlling fluid communication between the power unit, a fluid pressure source and a reservoir, a pressure sensor (20) and a circuit means differentiating the pressure signal in single or multiple steps as a function of time being provided for sensing output variables of the power unit, and the pressure variation signal being used to control the valve (10), **characterized in that**, for the drive (1), there is provided a position control comprising a control circuit which supplies a control signal for controlling the valve (10) in response to any deviation between actual and desired values of the position of the power unit (1), and that the pressure variation signal is superimposed onto the control signal of the position control.

2. The control system of claim 1, **characterized in that** the differentiating circuit is provided by at least one differentiating stage (21).

3. The control system of claim 1, **characterized in that** the differentiating circuit is defined by a mathematical model.

4. The control system of any of claims 1-3, **characterized in that** the valve is controlled by said pressure variation signal for dampening low frequency hydraulic power units.

5. The control system of any of claims 1-3, **characterized in that** the valve is controlled by said pressure variation signal for dampening vibrations of large fluid volumina, in particular in pipelines.

6. The control system of any of claims 1-5, **characterized in that** the valve is controlled by said pressure variation signal for noise reduction of a stamping or nibbling machine.

7. The control system of any of claims 1-6, **characterized in that** said pressure variation signal is superimposed to the positioning signal of a control loop or an open control system.

## Revendications

1. Dispositif de régulation pour des entraînements hydrauliques, en particulier des vérins hydrauliques, dans lequel la soupape commandant les voies du fluide de pression entre l'entraînement, une source de fluide de pression et un réservoir peut être actionnée par une électronique de régulation, dans lequel pour relever les grandeurs d'état de l'entraînement, il est prévu une sonde de pression (20) et un circuit destiné à dériver une ou plusieurs fois par rapport au temps la valeur de mesure de la pression, et dans lequel le signal de modification de la pression est utilisé pour actionner la soupape (10), **caractérisé en ce que**, pour l'entraînement (1), il est prévu une régulation de position sous forme d'un circuit de régulation qui fournit un signal de position pour la commande de la soupape (10) en fonction d'un écart entre une valeur réelle et une valeur de consigne pour la position de l'entraînement (1) et **en ce que** le signal de modification de la pression est superposé au signal de réglage de la régulation de position.

2. Dispositif de régulation suivant la revendication 1, **caractérisé en ce que**, comme circuit de dérivation, il est prévu au moins un étage de dérivation (21).

3. Dispositif de régulation suivant la revendication 1, **caractérisé en ce que**, comme circuit de dérivation, il est prévu un dispositif à modèle de calcul.

4. Dispositif de régulation suivant l'une des revendications 1 à 3, **caractérisé en ce que** la soupape peut être commandée par le signal de modification de pression au moyen de l'électronique de régulation, pour l'amortissement d'entraînements hydrauliques à basse fréquence.

5. Dispositif de régulation suivant l'une des revendications 1 à 4, **caractérisé en ce que** la soupape peut être commandée par le signal de modification de pression au moyen de l'électronique de régulation, pour l'amortissement d'oscillations de grands volumes de fluide d'écoulement, se produisant, en particulier, dans des conduites.

6. Dispositif de régulation suivant l'une des revendications 1 à 5, **caractérisé en ce que** la soupape peut être commandée par le signal de modification de pression au moyen de l'électronique de régulation, pour réduire le bruit d'une machine d'emboutissage ou d'une grignoteuse dans le sens de fermeture.

7. Dispositif de régulation suivant l'une des revendications 1 à 6, **caractérisé en ce que** la dérivée dans le temps du signal de pression est superposée au signal de commande d'un circuit de régulation ou d'une boucle de régulation ouverte.
